# EUROPEAN PATENT APPLICATION

(11) **EP 4 329 231 A1**
(43) Date of publication of application: **28.02.2024**
(21) Application number: 22831318.5
(22) Date of filing: 02.04.2022
(51) Int. Cl.: H04L 5/00, H04L 1/00

(54) **METHOD AND APPARATUS FOR SENDING MULTIPATH SIGNALING**

(30) Priority: 29.06.2021 CN 202110722471
(71) Applicant: Huawei Technologies Co., Ltd., Shenzhen, Guangdong 518129 (CN)
(72) Inventor: LI, Tao, Shenzhen, Guangdong 518129 (CN); HE, Xiaowen, Shenzhen, Guangdong 518129 (CN); CHENG, Hailiang, Shenzhen, Guangdong 518129 (CN); HU, Wenming, Shenzhen, Guangdong 518129 (CN)
(74) Representative: Thun, Clemens
(86) International application number: PCT/CN2022/085081
(87) International publication number: WO 2023/273487

(57) **Abstract**

This application provides a communication method to resolve a problem in the conventional technology that signaling is lost or times out due to a network status during signaling transmission. In the method, a first terminal accesses a network through a first path and a second path; sends, in response to an instruction of a first user, first signaling and second signaling that correspond to each other through the first path and the second path respectively, where the first signaling and the second signaling are used to request to establish a call connection to a second terminal; receives a reply instruction from the second terminal; and establishes the call connection to the second terminal. This method enables a call initiator to send redundant signaling to a call receiving party. This increases a call connection probability and improves user experience.

## Description

### TECHNICAL FIELD

This application relates to the communication field, and in particular, to a method for sending multipath signaling, and an apparatus.

### BACKGROUND

The real-time communication (real-time communication, RTC) technology is real-time transmission of various types of data over the Internet, including real-time transmission of media data such as audios, videos, texts, or images, and non-media data. In the real-time communication technology, a common manner is that voice/video calls are made between a plurality of terminal devices over the Internet. Currently, a plurality of applications, for example, MeeTime, WeChat^{®}, Tencent QQ^{®}, and Facetime^{®}, provide the foregoing voice/video calling function. When a user uses the foregoing application to initiate a real-time voice/video call, the user needs to first call a dialed contact by using invite signaling (invite signaling). After a terminal device used by the dialed contact receives the signaling and an answering instruction, terminal devices of the two parties establish a real-time voice/video call connection, to transmit audio and video streams in real time.

When the invite signaling is transmitted through a network, and a network status changes or a transmission fault occurs, the signaling may be lost or time out. This causes a call connection failure and deteriorates user experience.

### SUMMARY

This application provides a communication method to resolve a problem in the conventional technology that signaling is lost or times out due to a network status during signaling transmission. A call initiator sends redundant signaling to a call receiving party. This increases a call connection probability and improves user experience.

According to a first aspect, this application provides a communication system. The communication system includes a first terminal and a second terminal. The first terminal is configured to: access a network through a first path and a second path; and send, in response to an instruction of a first user, first signaling and second signaling that correspond to each other through the first path and the second path respectively, where the first signaling and the second signaling are used to request to establish a call connection to the second terminal. The second terminal is configured to: receive the first signaling and/or the second signaling; send reply signaling in response to an instruction of a second user, where the reply signaling indicates to agree to establish the call connection to the first terminal; and establish the call connection to the first terminal.

In this solution, the first terminal may access the network through a plurality of paths. When the user indicates the first terminal to initiate a call request, signaling requesting for a call may be sent through the plurality of paths simultaneously. In this way, a probability of transmitting, to the terminal which serves as a receiving party, the signaling requesting for a call is increased. This improves user experience.

According to the first aspect, in another possible implementation, the first terminal is further configured to access the network through a third path. When accessing the network through three or more paths, the first terminal may determine statuses of the first path, the second path, and the third path; and send, in response to the instruction of the first user, the first signaling and the second signaling through the first path and the second path respectively based on the statuses of the first path, the second path, and the third path.

In this solution, the first terminal accesses the network through more than three paths. When the user indicates the first terminal to initiate the call request, at least two paths may be selected for signaling transmission based on the statuses of the paths. In this way, a connection probability is increased, with overheads being controlled. This further improves user experience.

According to the first aspect, in another possible implementation, the second terminal is further configured to: access a network through a fourth path and a fifth path; and receive the first signaling transmitted through the fourth path and/or the second signaling transmitted through the fifth path by the first terminal.

In this solution, the second terminal which serves as the receiving party is also connected to the network through a plurality of paths. When receiving a plurality of pieces of signaling from a sending party, the second terminal may receive the signaling through different paths respectively. In this way, in the procedure of receiving the signaling, a probability of losing the signaling due to a poor network status of the second terminal is reduced. This further improves user experience.

According to the first aspect, in another possible implementation, the first path and the second path are paths corresponding to at least two of cellular network, wireless fidelity Wi-Fi, Bluetooth, and Ethernet communication technologies; or the first path and the second path are cellular networks corresponding to different subscriber identity module SIM cards.

In this solution, the first path and the second path may be network paths corresponding to different communication technologies, for example, Wi-Fi and Bluetooth, or may be network paths corresponding to the same communication technology, for example, cellular networks corresponding to different SIM cards. This extends the application scope of this application.

According to the first aspect, in another possible implementation, before sending the first signaling and the second signaling, the first terminal is further configured to determine that the status of the first path is less than a threshold.

In this solution, before sending redundant signaling, the first terminal needs to first determine that the status of the network path is less than the threshold. In other words, only when network quality is poor, a probability of successful call connection establishment needs to be increased by sending the redundant signaling. This helps reduce overheads generated by the transmission of the redundant signaling, to further save power and traffic resources of the terminal.

According to the first aspect, in another possible implementation, before sending the first signaling and the second signaling, the first terminal is further configured to determine that the instruction of the first user indicates the first terminal to establish the call connection to the second terminal by using a target application, or determine that the instruction of the first user indicates the first terminal to establish the call connection to the second terminal corresponding to a target contact.

In this solution, the user may indicate the first terminal to establish the call connection to the second terminal in a plurality of manners, such as an operator call or a third-party application. This extends the application scope of this application.

According to the first aspect, in another possible implementation, before sending the first signaling and the second signaling, the first terminal is further configured to determine that the first terminal has enabled a function of sending redundant signaling.

In this solution, transmission of the redundant signaling may be a function that may be enabled or disabled on the terminal. In other words, the user may enable or disable the function by touching a control. This further improves user experience.

According to the first aspect, in another possible implementation, the second terminal is configured to: receive the first signaling, where the first signaling includes an identifier; receive the second signaling, and determine that the second signaling also includes the identifier; and discard the second signaling.

In this solution, the second terminal may determine, based on the identifier in the signaling, that one of the first signaling and the second signaling is the redundant signaling. In this way, when receiving the two pieces of signaling, the second terminal does not need to respond to both of the two pieces of signaling. This guarantees user experience.

According to a second aspect, this application provides a call connection establishment method. The method is applied to a first terminal, and includes: accessing a network through a first path and a second path; sending, in response to an instruction of a first user, first signaling and second signaling that correspond to each other through the first path and the second path respectively, where the first signaling and the second signaling are used to request to establish a call connection to a second terminal; receiving a reply instruction from the second terminal; and establishing the call connection to the second terminal.

According to the second aspect, in a possible implementation, the method further includes: accessing the network through a third path. The sending, in response to an instruction of a first user, first signaling and second signaling that correspond to each other through the first path and the second path respectively specifically includes: determining statuses of the first path, the second path, and the third path; and sending, in response to the instruction of the first user, the first signaling and the second signaling through the first path and the second path respectively based on the statuses of the first path, the second path, and the third path.

According to the second aspect, in another possible implementation, before the sending first signaling and second signaling, the method further includes: determining that the status of the first path is less than a threshold.

According to the second aspect, in another possible implementation, the first path and the second path are paths corresponding to at least two of cellular network, Wi-Fi, Bluetooth, and Ethernet communication technologies; or the first path and the second path are cellular networks corresponding to different SIM cards.

According to the second aspect, in another possible implementation, before the sending first signaling and second signaling, the method further includes: determining that the instruction of the first user indicates the first terminal to establish the call connection to the second terminal by using a target application; or determining that the instruction of the first user indicates the first terminal to establish the call connection to the second terminal corresponding to a target contact.

According to the second aspect, in another possible implementation, before the sending first signaling and second signaling, the method further includes: determining that the first terminal has enabled a function of sending redundant signaling.

According to the second aspect, in another possible implementation, the first signaling and the second signaling has a same identifier.

According to a third aspect, this application provides a call connection establishment method. The method is applied to a second terminal, and includes: receiving first signaling and second signaling from a first terminal, where the first signaling corresponds to the second signaling, and the first signaling and the second signaling are used to request to establish a call connection to the second terminal; sending reply signaling in response to an instruction of a second user, where the reply signaling indicates to agree to establish the call connection to the first terminal; and establishing the call connection to the first terminal.

According to the third aspect, in a possible implementation, the second terminal is further configured to access a network through a fourth path and a fifth path. The receiving first signaling and second signaling from a first terminal specifically includes: receiving the first signaling transmitted through the fourth path and the second signaling transmitted through the fifth path.

According to the third aspect, in another possible implementation, the fourth path and the fifth path are paths corresponding to at least two of cellular network, wireless fidelity Wi-Fi, Bluetooth, and Ethernet communication technologies; or the fourth path and the fifth path are cellular networks corresponding to different subscriber identity module SIM cards.

According to the third aspect, in another possible implementation, the step of receiving first signaling and second signaling from a first terminal specifically includes: receiving the first signaling, where the first signaling includes an identifier; receiving the second signaling, and determining that the second signaling also includes the identifier; and discarding the second signaling.

According to a fourth aspect, this application provides an electronic device. The electronic device includes a memory and a processor. The memory is configured to store instructions, and the processor is configured to read the instructions, to perform the method according to the second aspect or the third aspect.

According to a fifth aspect, this application provides a computer program product. The computer program product includes a computer program. When the computer program is executed by a processor, the processor is enabled to perform the method according to the second aspect or the third aspect.

According to a sixth aspect, this application provides a computer-readable storage medium. The computer-readable storage medium stores a computer program. When the computer program is executed by a processor, the processor is enabled to perform the method according to the second aspect or the third aspect.

According to a seventh aspect, this application provides a chip. The chip includes a processor, configured to invoke a computer program from a memory and run the computer program, so that an electronic device on which the chip is installed is enabled to perform the method according to the second aspect or the third aspect.

### BRIEF DESCRIPTION OF DRAWINGS

FIG. 1A and FIG. 1B are diagrams of architectures for real-time communication between two devices over a network;
FIG. 2 is a schematic diagram of a real-time voice/video call procedure;
FIG. 3A to FIG. 3C are schematic diagrams of interfaces on which a first terminal initiates a call according to this application;
FIG. 4A to FIG. 4C are diagrams of architectures for real-time communication between two devices over a network according to this application;
FIG. 5A to FIG. 5D are schematic diagrams of interfaces on which a first terminal initiates a call according to this application;
FIG. 6A to FIG. 6C are schematic diagrams of interfaces on which a first terminal initiates a call according to this application;
FIG. 7A and FIG. 7B are schematic diagrams of interfaces on which transmission of redundant signaling is set according to this application;
FIG. 8 is a diagram of a hardware structure of a terminal according to this application;
FIG. 9 is a diagram of a software structure of a terminal according to this application;
FIG. 10 is a schematic flowchart according to an embodiment of this application;
FIG. 11 is a schematic flowchart according to an embodiment of this application;
FIG. 12 is a schematic flowchart according to an embodiment of this application; and
FIG. 13 is a diagram of an architecture of a chip system according to this application.

### DESCRIPTION OF EMBODIMENTS

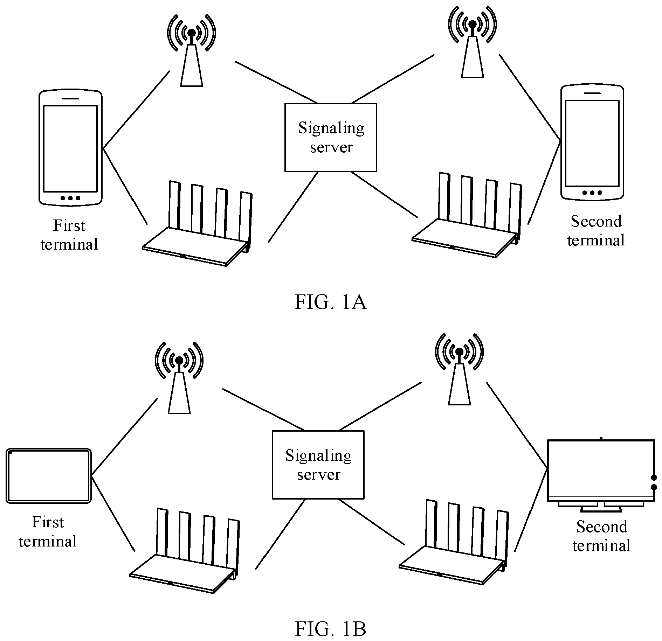

FIG. 1A is a diagram of an architecture for real-time communication between two devices over a network.

As shown in FIG. 1A, a first terminal and a second terminal are connected to a network through base stations provided by an operator and/or through routers, and are connected to a server that provides real-time communication. When the first terminal needs to make a real-time call to the second terminal, the first terminal may send signaling to the second terminal over the network. When the second terminal receives the signaling and a user of the second terminal determines to answer the call, the first terminal communicates with the second terminal, and the call is implemented.

It should be noted that, in FIG. 1A, mobile phones are used as examples for describing the first terminal and the second terminal. Actually, in this embodiment of this application, communication is not limited to communication between only mobile phones. Both the first terminal and the second terminal may be other devices with a voice calling function or a video calling function, for example, a smart watch, a smart television, a personal computer (personal computer, PC), or a tablet computer. This is not limited in this application. As shown in FIG. 1B, in another scenario of this application, a tablet computer and a smart television may be separately connected to the network, and perform a real-time communication service.

The real-time communication service between the first terminal and the second terminal includes manners such as a voice call or a video call. In addition, for both the voice call and the video call, before the first terminal is connected to the second terminal, an initiator needs to first send signaling for requesting to establish a connection. After receiving the signaling, a receiving party replies with signaling that indicates to agree to establish the connection. In this way, the first terminal and the second terminal establish the real-time communication service, and start to transmit real-time audio/video media data. For ease of description, the following mainly describes embodiments by using a voice call as an example. However, a type of a real-time communication service is not limited in this application.

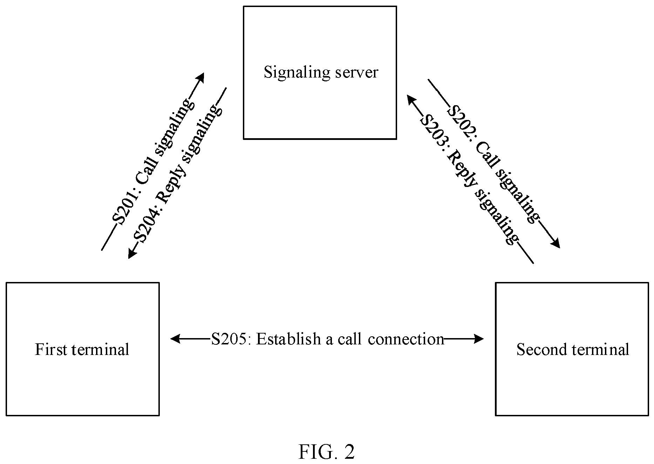

FIG. 2 is a schematic diagram of a real-time voice/video call procedure.

As shown in FIG. 2, the real-time voice/video call procedure includes the following steps.

S201: A first terminal is connected to, in manners such as Wi-Fi or a cellular network, a server that provides a real-time communication service, and initiates a call to a second terminal. Specifically, the first terminal sends invite signaling to the signaling server. The invite signaling requests to establish a real-time call connection to the second terminal.

Differences between the signaling and real-time audio/video media data transmitted after the call connection is established mainly lie in that in transmission of the audio/video media data, each frame of audio and video data is encoded and then transmitted continuously, and frame loss only causes audio/video frame to freeze during a call. However, the signaling is a message in a defined format. The signaling may be processed only after the complete message is received. The signaling usually includes various pieces of information related to the call, for example, information such as a number of a calling mobile phone, communication identification (identification, ID) of the calling mobile phone, a communication number of a called mobile phone, communication ID of the called mobile phone, a service type, and a device type.

S202: When receiving the signaling sent by the first terminal, the signaling server forwards the signaling to the second terminal based on the information of the second terminal included in the signaling.

S203: When receiving the signaling, the second terminal sends a reminder. The reminder reminds a user of the second terminal that another terminal is calling the second terminal. The reminder of the second terminal may be as follows: An interface shows that the first terminal is calling the second terminal, and displays two controls: "Accept" and "Decline"; the second terminal vibrates; or the second terminal plays a preset ringtone. The user of the second terminal may choose to answer or decline the call request. When the user chooses to answer the call, for example, taps or slides "Accept" control on the interface, the second terminal sends, to the signaling server, reply signaling indicating to answer the call.

S204: When receiving the signaling sent by the second terminal, the signaling server forwards the reply signaling to the first terminal.

S205: When the first terminal receives the response signaling, the first terminal is connected to the second terminal, and a media transmission path is created. The first terminal and the second terminal transmit audio/video data streams through the media transmission path.

For a real-time voice/video call, no special software and hardware architecture is designed to guarantee signaling transmission. In the signaling exchange procedure between the first terminal and the second terminal, signaling loss or timeout may occur if network connection quality is poor, the user moves to an area with poor network quality in this period of time, or the terminal is handed over to a Wi-Fi network or a cellular network due to movement of the user. The signaling is used to control the establishment of the call and control the call procedure, for example, mute the terminal or invite another user. When a peer end fails to completely receive the signaling during a transmission procedure due to a network fault, the corresponding operation cannot be implemented. If the peer end fails to completely receive the signaling for call establishment, the call cannot be established. This causes a call failure of the user, and deteriorates user experience.

For an operator call, although the operator usually uses the special software and hardware architecture to guarantee signaling transmission, the signaling loss or timeout may still occur due to coverage of base stations, the movement of the user to the area with poor signal quality, or the movement of the terminal from one cell to another cell. This causes a case in which the peer end fails to completely receive the signaling for call establishment. Therefore, signaling transmission in the operator call also times out.

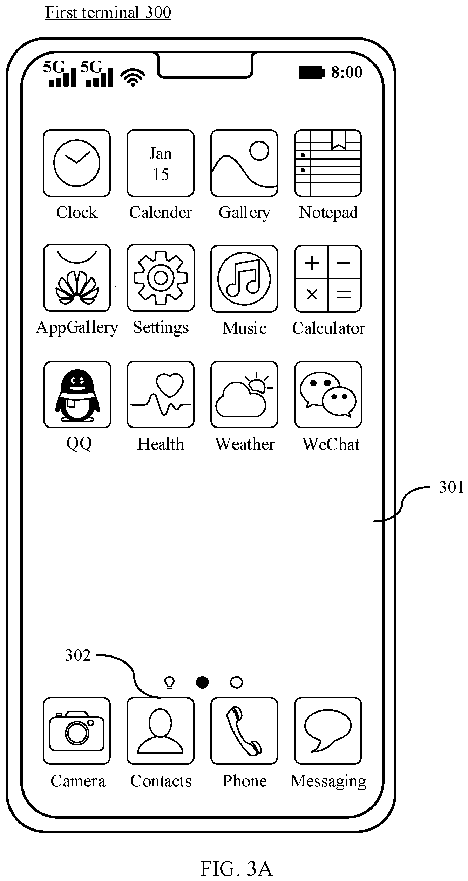

In this embodiment of this application, as shown in FIG. 3A, a first terminal 300 displays a home screen. The home screen 301 may be an interface displayed after the first terminal 300 is powered on, or may be another interface, for example, a background interface or a leftmost screen. This is not limited in this application. The home screen 301 may include various applications installed on the first terminal 300, for example, may include icons of applications pre-installed on the first terminal 300, such as Clock, Calendar, Gallery, Notepad, AppGallery, Settings, Music, Calculator, Health, Weather, Camera, Phone, Messaging, Contacts, and the like. For another example, the home screen 301 may also include third-party applications, such as WeChat, QQ, Alipay, online games, and the like.

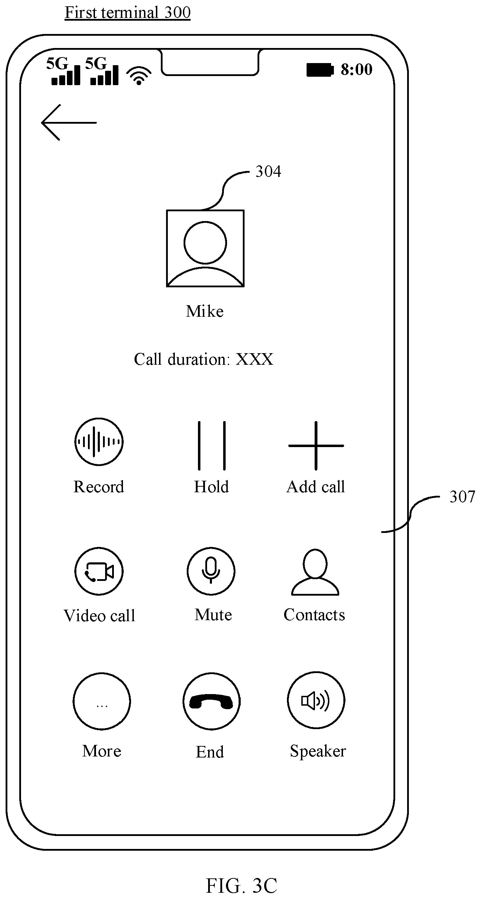

If a user of the first terminal (referred to as a user A) wants to initiate a MeeTime call to another user, the user may tap the icon of the Phone application on the home screen. In response to the operation, the first terminal may display an interface of the Phone application, instead of displaying the home screen. In a possible case, MeeTime is integrated into the Phone application. The user may further tap a MeeTime menu on the interface of the Phone application, so that a MeeTime interface is displayed. In the MeeTime interface, icons of available contacts are displayed, for example, including "Contact Mike" 304, "Contact Nike" 305, and "Contact Owen". In this way, the user may select, on the MeeTime interface 303, a contact to call. Optionally, if the user wants to initiate a two-party call to a specific contact, the user may select the contact on the MeeTime interface, for example, select "Contact Mike" 304 and tap Start call. In response to the operation, the first terminal 300 may send signaling for MeeTime call establishment to "Contact Mike" 304. As shown in FIG. 3C, after establishing a call connection to "Contact Mike" 304, the first terminal 300 displays a call screen 307. The call screen 307 includes information such as "Contact Mike" 304, call duration, and call-related controls.

Optionally, if the user wants to initiate a multi-party call to a plurality of contacts, the user may select the plurality of contacts on the MeeTime interface 303, for example, select "Contact Mike" 304 and "Contact Nike" 305. In this case, a key of the Start call 306 may pop up on the MeeTime interface 303. If the user taps the Start call 306, the first terminal 300 may, in response to the operation, send the signaling for MeeTime call establishment to both "Contact Mike" 304 and "Contact Nike" 305.

A prerequisite for MeeTime call establishment is that the signaling for MeeTime call establishment has to be completely received by the peer terminal. However, if the signal is not received by the peer end due to a network fault or poor signal quality, the call connection fails. This deteriorates user experience. In an implementation of this application, when the first terminal is connected to the signaling server through a plurality of networks, two pieces of signaling may be separately sent through at least two paths in the plurality of networks. Both of the two pieces of signaling are used for establishment of a MeeTime call to the peer end.

The plurality of networks means that the first terminal is connected to the signaling server through at least two network paths of a same type or different types. In other words, the first terminal is connected to the signaling server through network paths of at least two types, such as a cellular network, Wi-Fi, Ethernet, and Bluetooth, or may be connected to the signaling server through network paths of a same type, such as SIM cards in a plurality of cellular networks, or Wi-Fi networks in a plurality of frequency bands.

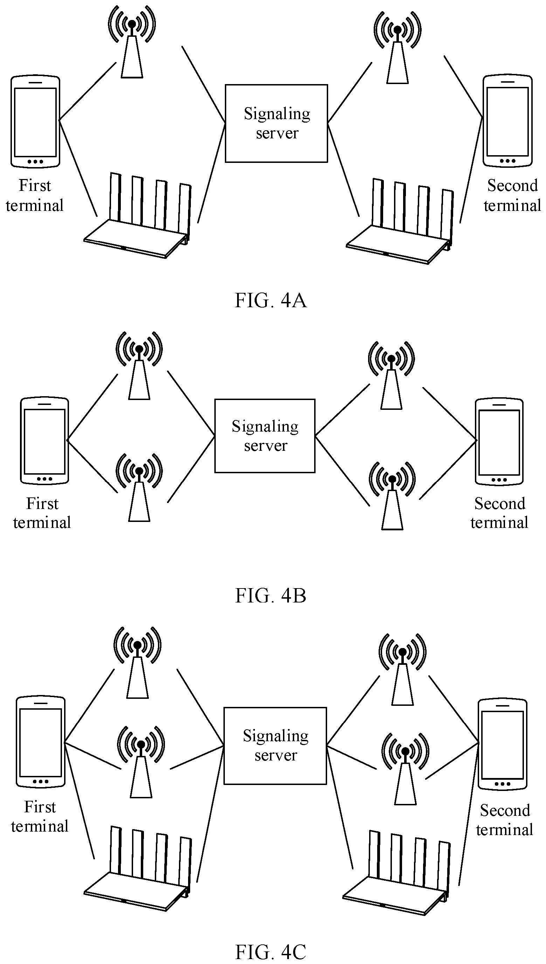

In a case, as shown in FIG. 4A, the first terminal is a mobile phone or an electronic device such as a tablet computer that supports a cellular network. The first terminal may access the network through both the cellular network and Wi-Fi. When receiving an instruction indicating the user to make a MeeTime call to the peer second terminal, the first terminal may send two paths of signaling through Wi-Fi network and the cellular network. To be specific, the first terminal sends one piece of signaling to the signaling server through the Wi-Fi network, and sends the other piece of signaling to the signaling server through the cellular network. When receiving the signaling, the signaling server forwards the signaling to the second terminal.

In another case, as shown in FIG. 4B, the first terminal accesses the network through a plurality of cellular networks. For example, currently, a large number of mobile phones may support use of a plurality of subscriber identity module (subscriber identity module, SIM) cards. In this case, the mobile phone may access a network through cellular networks respectively corresponding to the plurality of SIM cards. The plurality of SIM cards may be provided by different operators, or may be provided by a same operator. This is not limited in this application. In this case, the first terminal may transmit a plurality of pieces of signaling through a plurality of network paths established between the first terminal and the operators. To be specific, one piece of signaling is sent through a network path corresponding to one SIM card, and redundant signaling corresponding to the signaling is transmitted through a network path corresponding to another SIM card. Similarly, the first terminal may alternatively access the network through a plurality of Wi-Fi networks. For example, the first terminal may be connected to a specific Wi-Fi hotspot separately at 2.4 GHz and 5 GHz frequency bands, or may be connected to two Wi-Fi hotspots. In this way, a plurality of pieces of signaling may be sent through the plurality of Wi-Fi networks.

In another case, as shown in FIG. 4C, the first terminal accesses the network through at least three network paths. For example, two SIM cards may be installed on the first terminal, and two network paths are established between the first terminal and an operator based on the two SIM cards. The first terminal is further connected to at least one Wi-Fi hotspot. This forms the three paths. When a connection to the second terminal needs to be established, one piece of signaling may be sent on each of the three paths, or signaling transmission is performed on only some of the paths. For example, signaling that corresponds to each other is sent on two of the three paths. When signaling transmission is performed on only some of the paths, before sending signaling, the first terminal may determine network statuses of the three paths, and select two paths with better network statuses to transmit the signaling. Alternatively, the first terminal may preset, or preset based on an instruction of the user, a network path for signaling transmission. When a status of the network path is normal, the preset network path is preferably selected for signaling transmission. Only when the status of the preset network path is less than a threshold, another network path is selected for signaling transmission.

To determine the network status of the network path, quality of the network path may be measured based on one or more of parameters of the plurality of network paths. The parameters of the plurality of network paths include a received signal strength indicator (received signal strength indication, RSSI), a quantity of ping (ping) times, a ping cycle, a ping latency, enable/disable status of long-term evolution (long-term evolution, LTE), and the like. A measured parameter of the network path may be compared with a preset value, to determine whether the network status of the current network path is of good quality or poor quality, to further determine whether a call needs to be initiated by sending redundant signaling.

Correspondingly, there are specifically a plurality of possible implementations as follows in which the signaling server forwards the signaling to the second terminal.

In a possible implementation, the second terminal accesses the network through only one network path, and is connected to the signaling server. For example, the second terminal uses only a cellular network or only a Wi-Fi network. In this case, because there is only one network path between the signaling server and the second terminal, the signaling server forwards, to the second terminal, through the network path, the signaling sent by the first terminal.

In another possible implementation, the second terminal may alternatively be connected to the signaling server through a plurality of networks. For example, the second terminal may be connected to the signaling server through at least two types of a cellular network, Wi-Fi, Ethernet, and Bluetooth, or may be connected to the signaling server through SIM cards in a plurality of cellular networks, or Wi-Fi networks in a plurality of frequency bands. When the second terminal is connected to the signaling server through the plurality of networks, for example, is connected to the signaling server through both a Wi-Fi network and a cellular network, the signaling server may send a plurality of pieces of signaling received from the first terminal to the second terminal through the Wi-Fi network and the cellular network that are between the second terminal and the signaling server. There may be a plurality of policies for the transmission manner. For example, each time the signaling server receives the signaling sent by the first terminal to the second terminal, the signaling server may randomly send the signaling to the second terminal through a specific network path between the second terminal and the signaling server. Alternatively, each time the signaling server receives the signaling sent by the first terminal to the second terminal, the signaling server first determines a path that is currently in a better status and that is between the signaling server and the second terminal, and sends the signaling to the second terminal through the path. Alternatively, when the signaling server receives, for a first time, the signaling sent by the first terminal to the second terminal, the signaling server selects, randomly or based on path statuses, a first path for signaling transmission. When the signaling server receives, for a second time, the signaling sent by the first terminal to the second terminal, and the signaling is redundant signaling corresponding to the signaling received for the first time, the signaling server selects a path different from the first path for forwarding the signaling to the second terminal. In this case, the signaling server separately transmits signaling through different paths between the signaling server and the second terminal. This reduces a probability of a case in which the second terminal fails to completely receive the signaling due to a network status or the like.

Because a plurality of pieces of signaling are sent to the second terminal by the signaling server, when the second terminal receives first signaling, the second terminal triggers preset prompt information, for example, vibrates when ringing, and displays an incoming call screen. After the user chooses to answer the call, the second terminal sends response signaling to the first terminal, to establish the call with the first terminal. When receiving second signaling from the first terminal, the second terminal determines that the signaling has been received. Therefore, the second terminal does not process the signaling, and may further discard the signaling.

It should be noted that, when the first terminal sends the signaling to the second terminal by using the signaling server, an order of each piece of signaling is determined based on an identifier. The identifier includes a Link ID, a Serial ID, or a Sequence ID. When the first terminal sends the plurality of pieces of signaling to the second terminal, in the plurality of pieces of signaling, the first signaling and the second signaling have different Link IDs, but the same Serial ID or Sequence ID. Correspondingly, after completely receiving the first signaling sent by the first terminal, the second terminal records information about the first signaling, for example, records a Serial ID or a Sequence ID of the first signaling. When the second signaling is subsequently received, information about the second signaling is compared with the information about the first signaling, to determine that the two pieces of signaling are signaling that correspond to each other. Therefore, when receiving the second signaling, regardless of a current state of the second terminal, for example, the state may be that the second terminal has established a call with the first terminal, the second terminal has declined a call, or the second terminal has answered and then ended a call, the second terminal may determine that the second signaling is redundant signaling corresponding to the signaling that has been received, and thus does not process the signaling. In this way, when the second terminal completely receives the first signaling from the first terminal, the second terminal may recognize that the second signaling subsequently received is the redundant signaling, and does not repeatedly remind the user of the second terminal. If the second terminal does not receive or does not completely receive the first signaling from the first terminal, the second terminal may not record the information about the first signaling and does not trigger preset reminder information. When subsequently receiving the second signaling, the second terminal triggers the prompt information of the second terminal based on the second signaling, and establishes a call with the first terminal after the user chooses to answer the call. In this way, a probability of call establishment between the first terminal and the second terminal may be increased. This improves user experience.

The foregoing describes the procedure of establishing the call connection by using an example in which the first terminal and the second terminal establish the MeeTime call by using the Phone application. However, this is not limited in this application. The first terminal may alternatively initiate the operator call to the second terminal by using the Phone application and establish the call connection.

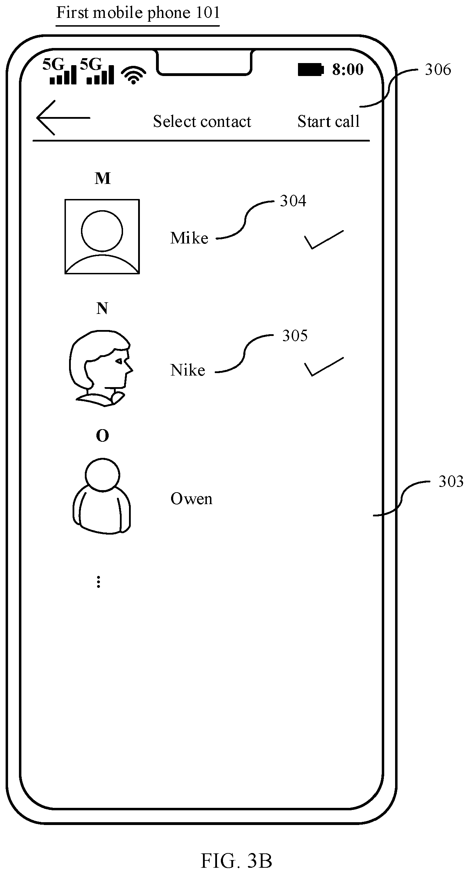

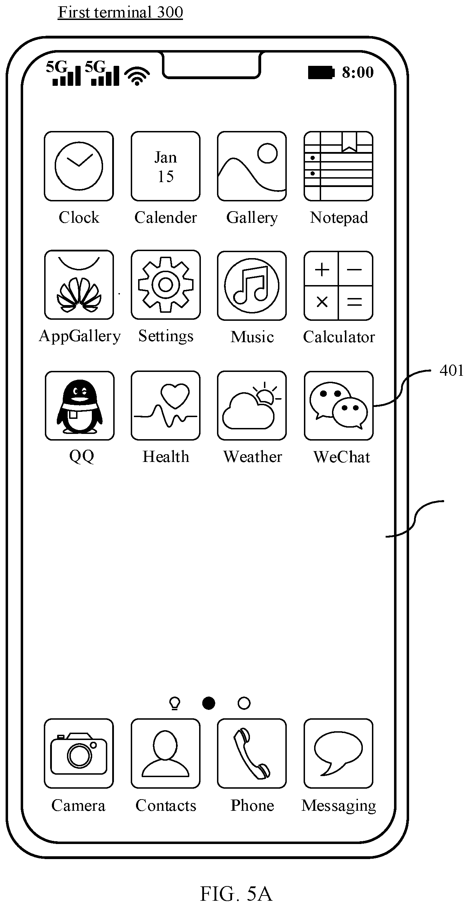

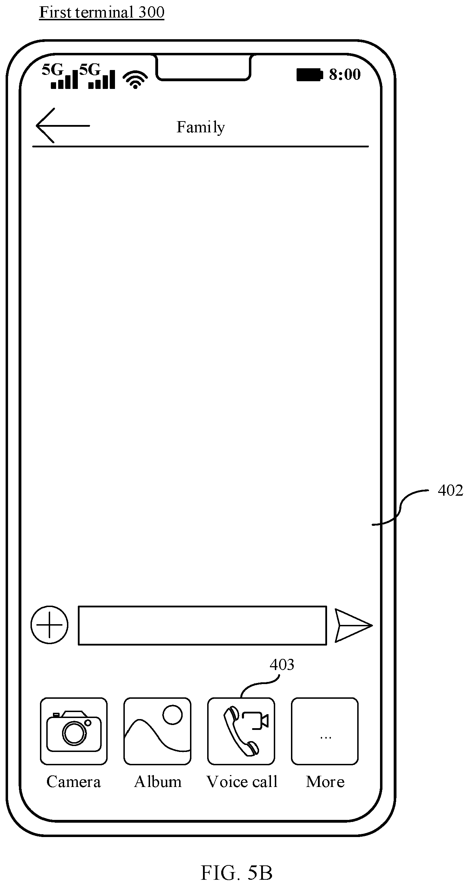

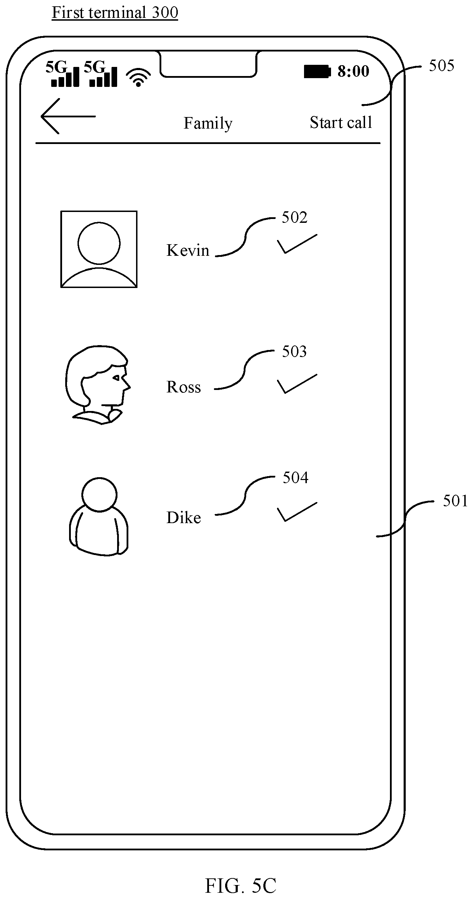

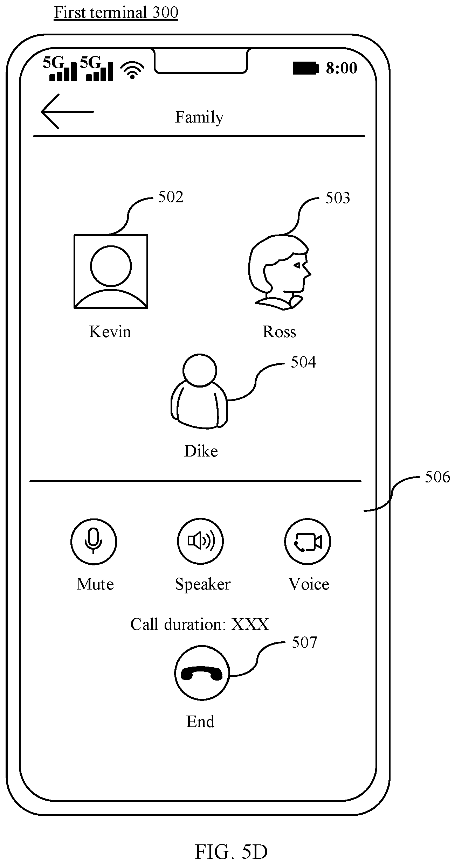

FIG. 3 (FIG. 3A to FIG. 3C) shows the procedure showing how the user of the first terminal initiates a MeeTime call or an operator call to the second terminal by using the Phone application. Correspondingly, FIG. 5 (FIG. 5A to FIG. 5D) shows that the user of the first terminal initiates a call to another terminal by using a third-party application.

In this embodiment of this application, as shown in FIG. 5A, the first terminal 300 still displays the home screen 301. If the user wants to initiate a real-time voice/video call to another user by using the third-party application, the user may tap the corresponding third-party APP, for example, WeChat 401, on the home screen 301. In response to the operation, the first terminal 300 may display an interface of the third-party APP, for example, a group chat interface 402 (as shown in FIG. 5B), instead of displaying the home screen 301. The group chat interface 402 may include various chat-related icons, for example, Camera, Album, Voice call 403, More, and the like. In this way, the user may tap a key of the Voice call 403 on the group chat interface 402. In response to the operation, the first terminal 300 may display a group chat selection interface 501 (as shown in FIG. 5C), instead of displaying the group chat interface 402. The group chat selection interface 501 may include icons of contacts in the group chat, for example, include "Contact Kevin" 502, "Contact Ross" 503, and "Contact Dike" 504 in a "Family" group chat. In this way, the user may select, on the group chat selection interface 501, a contact to call. With FIG. 3B, if the user wants to initiate a two-party real-time voice/video call to a specific contact, the user may select the contact on the group chat selection interface 501, for example, select "Contact Kevin" 502. In response to the operation, the first terminal 300 may send signaling for real-time voice/video call establishment to "Contact Kevin" 502. Similarly, if the user wants to initiate a multi-party real-time voice/video call to a plurality of contacts, the user may select the plurality of contacts on the group chat selection interface 501, for example, select "Contact Kevin" 502, "Contact Ross" 503, and "Contact Dike" 504. For specific implementation of selecting the plurality of contacts, refer to related descriptions in FIG. 3B of selecting the plurality of contacts. Details are not described herein again.

Further, the user may tap Start call 505. In response to the operation, the first terminal 300 initiates a multi-party real-time voice/video call to "Contact Kevin" 502, "Contact Ross" 503, and "Contact Dike" 504, and displays a real-time voice/video call screen 506 (as shown in FIG. 5D), instead of displaying the group chat selection interface 501 of contacts. The real-time voice/video call screen 506 may include icons of the plurality of selected contacts, for example, include "Contact Kevin" 502, "Contact Ross" 503, and "Contact Dike" 504, and may further include call-related icons, for example, include Mute, Speaker, Switch to Video, and End 507.

It should be further understood that FIG. 3 (FIG. 3A to FIG. 3C) describes a method of initiating the MeeTime call or the operator call by using the Phone application, and FIG. 5 (FIG. 5A to FIG. 5D) describes a method of initiating a corresponding real-time voice/video call by using the third-party application. In a possible implementation, the operator call, the MeeTime call, or another real-time voice/video call may be initiated by using a same application. The following specifically describes the method.

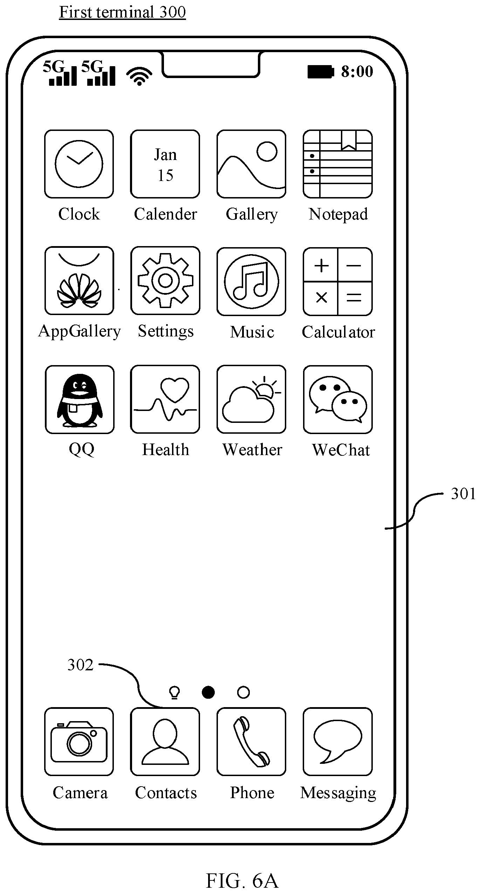

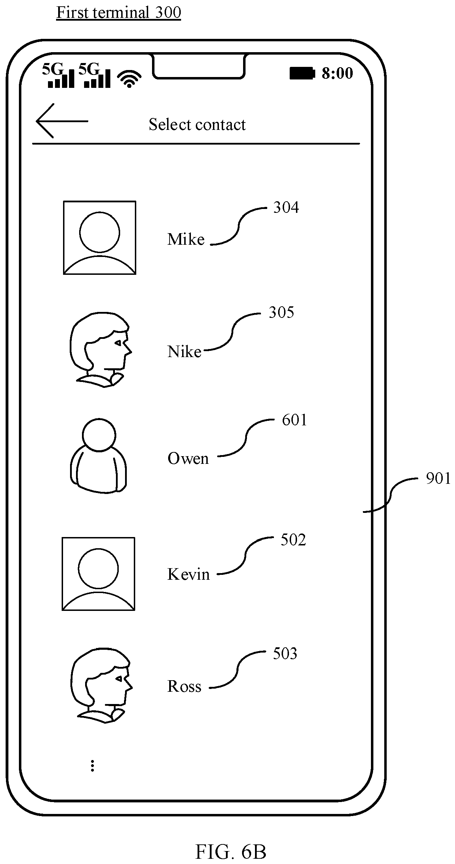

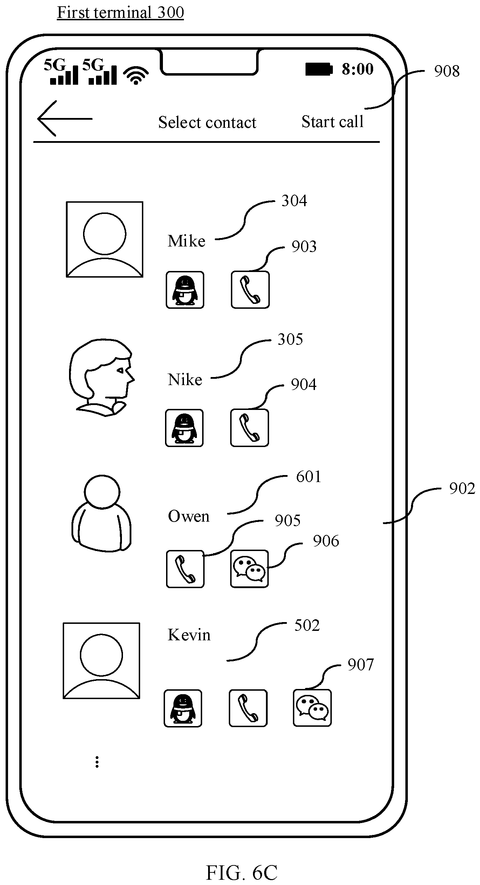

As shown in FIG. 6A, the first terminal 300 still displays the home screen 301. If the user wants to initiate an operator call and/or a real-time voice/video call to another user, the user taps Contacts 302, so that the first terminal 300 displays a contact selection interface 901 (as shown in FIG. 6B), instead of displaying the home screen 301. Different from the contact selection interface 303 and the contact selection interface 501, the contact selection interface 901 may not only include the contacts corresponding to the operator call, for example, "Contact Mike" 304, "Contact Nike" 304, and "Contact Owen" 601, but also include the contacts corresponding to the third-party APP, for example, "Contact Kevin" 502 and "Contact Ross" 503. In this way, the user may select, on the contact selection interface 901, a contact that the user wants to call. In response to the operation, the first terminal 300 may display a second-level menu near a selected contact on the contact selection interface 902 (FIG. 6C). The second-level menu may include a contact mode for the contact. For example, if "Contact Mike" 304 is selected, a second-level menu below "Contact Mike" 304 includes QQ call and operator call 903. In other words, the user may contact "Contact Mike" 304 through the QQ call and/or the operator call 903. For another example, if "Contact Nike" 305 is selected, a second-level menu below "Contact Nike" 305 includes QQ call and operator call 904. In other words, the user may contact " Contact Nike" 305 through the QQ call and/or the operator call 904. For another example, if " Contact Owen" 601 is selected, a second-level menu below "Contact Owen" 601 includes operator call 905 and WeChat call 906. In other words, the user may contact "Contact Owen" 601 through the operator call 905 and the WeChat call 906. For another example, if "Contact Kevin" 502 is selected, a second-level menu below "Contact Owen" 601 includes QQ call, operator call, and WeChat call 907. In other words, the user may contact "Contact Kevin" 502 through the QQ call, the operator call, and/or the WeChat call 907.

In some possible implementations, various contact modes in the second-level menu may be arranged based on frequency of use, for example, arranged based on a descending order of the frequency of use from left to right. For example, for the second-level menu below "Contact Mike" 304, if the QQ call is used more frequently than the operator call 903, the QQ call and the operator call 903 are sequentially arranged from left to right. For another example, for "Contact Kevin" 502, if the QQ call is used more frequently than the operator call, and the operator call is used more frequently than the WeChat call 907, the QQ call, the operator call, and the WeChat call 907 are sequentially arranged from left to right. In this way, the user may know, based on the order of the various contact modes in the second-level menu, a mode in which it is easier to contact the other party. In this way, the user contacts the other party more quickly. This further improves user experience. Certainly, the arrangement of the various contact modes in the second-level menu based on the frequency of use is merely used as an example of arrangement modes, and does not constitute a limitation. For example, the contact modes in the second-level menu can be ranged based on an order of use. For example, for the second-level menu below "Contact Mike" 304, if the QQ call is used most recently, and the operator call 903 is used earlier than the QQ call, the QQ call and the operator call 903 are sequentially arranged from left to right. For another example, for "Contact Kevin" 502, if the QQ call is the call mode used most recently, the operator call 903 is a call mode used earlier than the QQ call, and the WeChat call 907 is the earliest used call mode, earlier than the operator call 903, the QQ call, the operator call, and the WeChat call 907 are sequentially arranged from left to right.

Further, the user may select a corresponding contact mode from the second-level menu on the contact selection interface 902, for example, select the corresponding contact mode through a touch and hold operation. A check mark may be displayed near the selected contact mode. The user may deselect the wrongly selected contact mode. Alternatively, the selected contact mode may be highlighted or jiggle for display, to be distinct from other contact modes. Then, the user may tap Start call 908. In response to the operation, the first terminal 300 may initiate a call to the corresponding contact, and displays a corresponding call screen, instead of displaying the contact selection interface 902. The Start call 306 may be displayed in the contact selection interface 902 by default, or may pop out after the contact or the contact mode is selected. As shown in FIG. 6C, for example, if the user selects the operator call 903 and taps the Start call 908, the first terminal 300 may send, to "Contact Mike" 304, signaling for establishment of an operator call connection, and displays an operator call screen after the call connection is established, instead of displaying the contact selection interface 902. For a specific implementation of the operator call screen, refer to the interface shown in FIG. 3C. For another example, if the user selects the WeChat call 906 and taps the Start call 908, the first terminal 300 may send, to "Contact Owen" 601, signaling for establishment of a real-time voice/video call connection, and displays a real-time voice/video call screen after the call connection is established, instead of displaying the contact selection interface 902. For a specific implementation of the real-time voice/video call screen, refer to the interface shown in FIG. 5D. For still another example, if the user selects the operator call 905 and the WeChat call 907, and taps the Start call 908, the first terminal 300 may initiate an operator call to "Contact Owen" 601, initiate a real-time voice/video call to "Contact Kevin" 502, and displays an integrated call screen after the call connections are established, instead of displaying the contact selection interface 902.

It should be understood that initiating a call on the second-level menu is merely used as an example of call modes, and does not constitute a limitation. For example, the user selects a contact. Then, in response to the operation, the first terminal 300 may actively initiate a corresponding call based on a contact mode that is most frequently used or recently used by the contact. For example, as shown in FIG. 6B, if the user selects "Contact Kevin" 502, because " Contact Kevin" 502 uses QQ most frequently, the first terminal 300 may initiate a real-time voice/video call to "Contact Kevin" 502. If the user selects "Contact Owen" 601, because "Contact Kevin" 502 uses the operator call most frequently, the first terminal 300 may initiate an operator call to "Contact Kevin" 502.

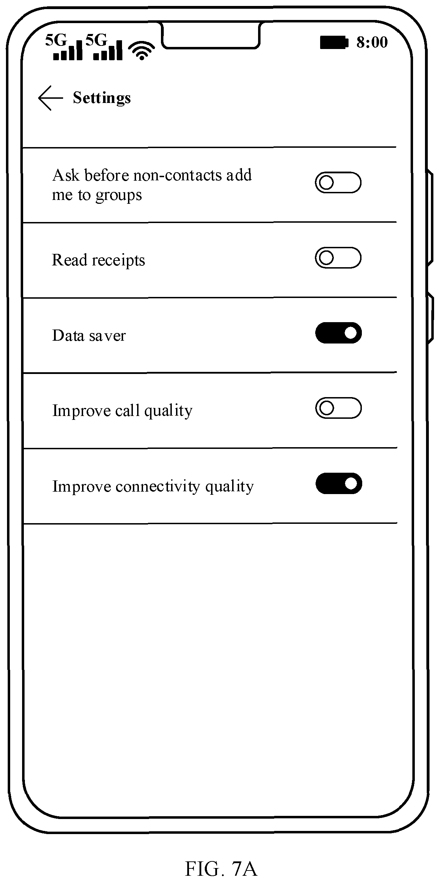

The method of sending redundant signaling through the plurality of network paths according to this application can help improve a rate of successful invite signaling transmission and improve user experience. In addition, because information in the signaling is small and does not occupy excessive network resources, the redundant signaling is sent by default during a network call. The method of sending redundant signaling by default may be system-level. In other words, the method is applied to all call applications on the terminal, or is applied to a call application that is set by a system to enable the solution. For example, the system may set that an operator call, a WeChat voice call, or a MeeTime call may trigger the solution of sending redundant signaling. Alternatively, the system sets that the method of sending redundant signaling may be triggered when the user makes the real-time voice/video call such as a WeChat voice call or a MeeTime call. In another possible implementation, the user may determine, by using a control in settings, whether to enable the solution. As shown in FIG. 7A, a control "Improve connectivity quality" may be used to control whether to enable this solution. When the user sets the control to off, the terminal initiates only one path of signaling when initiating a call. When the user sets the control to on, the terminal sends a plurality of paths of redundant signaling when initiating a call.

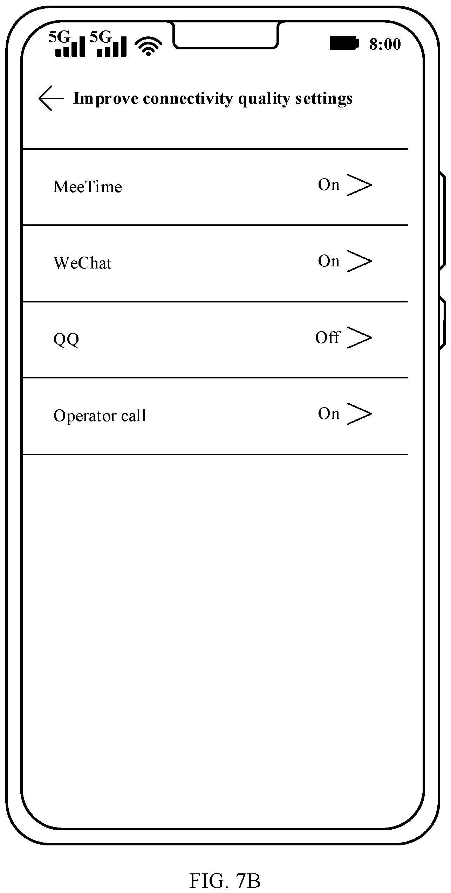

Further, the method of sending redundant signaling may alternatively be application-level. In other words, the function is provided by a corresponding application. Correspondingly, as shown in FIG. 7B, when setting the control to on, the user may further perform setting, to determine applications that enable the solution of sending redundant signaling and applications that do not enable this solution. Alternatively, a control may not be necessary for determining whether to enable this solution on the terminal. Instead, the user may directly perform setting on each application that supports the solution of sending redundant signaling, to determine whether a corresponding application enables this solution.

In addition, an "Adaptive" control may be further added. When the control is in an enabled state, the terminal may determine, based on a current network condition, whether to send the redundant signaling. For example, when the user indicates the terminal to establish a call with another terminal, the current network status of the terminal may be first determined. If the terminal currently detects that the network status is good, for example, the terminal is currently connected to Wi-Fi and signal quality is good, a solution of not sending redundant signaling may be selected. When the terminal detects that the network status is poor or network jitter occurs, the terminal may select the solution of sending redundant signaling.

It should be noted that the foregoing description that the user uses the control to determine whether to enable the solution is only an example. This is not limited in this application.

Alternatively, a policy for determining whether to send redundant signaling during a call may not be set for the entire application. Instead, when the user sends a call instruction, a separate control may be used to determine whether to use the solution of sending redundant signaling during a current call.

In a possible case, when a call control is tapped, a plurality of controls further pop up, to separately indicate "Using the solution of sending redundant signaling" and "Not using the solution of sending redundant signaling". In this way, the user is enabled to choose whether to send redundant signaling for this call.

In another possible implementation, there is a separate control on the call screen. The control indicates the user to send a call request by using the solution of sending redundant signaling. When the user selects this control, the call request is sent by sending redundant signaling.

In another manner, whether to use the solution of sending redundant signaling may be further determined based on a contact. For example, a plurality of contacts may be selected from Contacts of the system or Contacts of specific call software. Call rules for these contacts are set to be that a call is made by sending redundant signaling by default. Then, when these contacts are called by using the terminal, the terminal device automatically sends redundant signaling. When another contact is called by using the terminal, the call may be made by sending only one path of signaling.

For example, the user may set some contacts as starred contacts. When a specific contact is set as a starred contact, the first terminal displays a corresponding mark on the interface. The mark indicates that the contact has been set as a starred contact. A starred contact is usually a contact that the user of the first terminal cherishes and calls very frequently. Therefore, when the user initiates a call to the starred contact, the user usually values connection quality. For that reason, for a request of calling the starred contact, the first terminal makes a call by sending redundant signaling. For a request of calling another contact, the first terminal makes a call without sending redundant signals.

In another possible implementation, it may be set that redundant signaling is sent when a call is initiated to a contact from Contacts, and a call is made without sending redundant signals when the call is initiated to an unknown number.

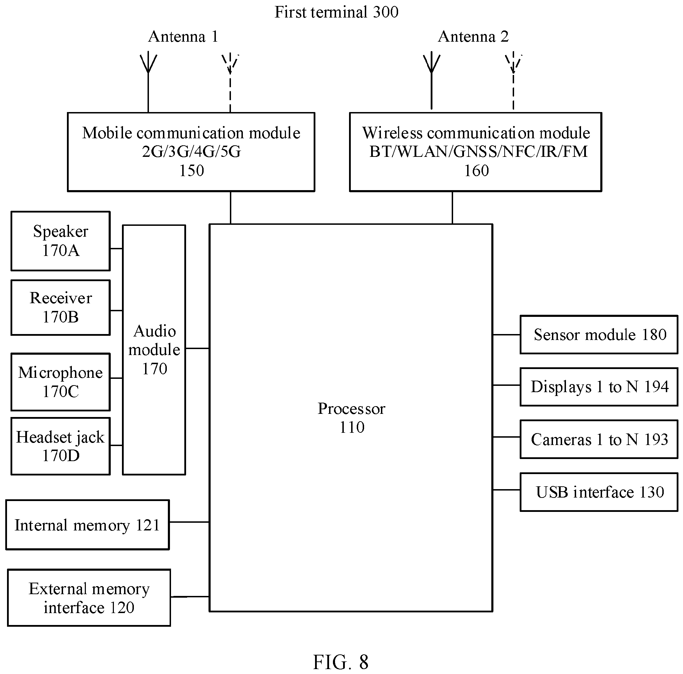

In FIG. 8, the first terminal 300 is used as an example to show a diagram of a hardware structure of the terminal according to this solution.

The first terminal 300 may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset jack 170D, a sensor module 180, and the like.

It may be understood that the structure illustrated in this embodiment of the present invention does not constitute a specific limitation on the first terminal. In some other embodiments of this application, the first terminal 300 may include more or fewer components than those shown in the figure, or some components may be combined, or some components may be split, or there may be a different component layout. The components shown in the figure may be implemented by hardware, software, or a combination of software and hardware. In addition, for a hardware structure of another terminal according to this application, for example, the second terminal, refer to FIG. 8. Details are not described again.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces a waiting time of the processor 110, and improves system efficiency.

A wireless communication function of the first terminal 300 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first terminal 300 may be configured to cover one or more communication frequency bands. Different antennas may also be multiplexed to improve antenna utilization. For example, the antenna 1 may be multiplexed as a diversity antenna of a wireless local area network. In some other embodiments, the antennas may be used in conjunction with a tuning switch.

The mobile communication module 150 may provide a wireless communication solution including 2G/3G/ 4G/5G applied to the first terminal 300. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The wireless communication module 160 may provide a wireless communication solution that is applied to the first terminal 300 and that includes a wireless local area network (wireless local area network, WLAN), for example, a wireless fidelity (wireless fidelity, Wi-Fi) network, Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components that integrate at least one communication processing module. The wireless communication module 160 receives the electromagnetic wave through the antenna 2, performs frequency modulation and filtering processing on the electromagnetic wave signal, and sends the processed signal to the processor 110. The wireless communication module 160 may further receive a to-be-sent signal from the processor 110, perform frequency modulation and amplification on the signal, and convert the signal into the electromagnetic wave for radiation through the antenna 2.

In some embodiments, the antenna 1 of the first terminal 300 is coupled to the mobile communication module 150, and the antenna 2 is coupled to the wireless communication module 160, so that the first terminal 300 can communicate with the network and other devices through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), LTE, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The first terminal 300 implements a display function by using the GPU, the display 194, the application processor, and the like. The GPU is an image processing microprocessor, and is connected to the display 194 and the application processor. The GPU is configured to perform mathematical and geometric calculations, and is configured for graphics rendering. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-Led, a micro-Led, a Micro-OLED, a quantum dot light-emitting diode (quantum dot light-emitting diodes, QLED), or the like. In some embodiments, the first terminal 300 may include one or N displays 194, where N is a positive integer greater than 1.

The first terminal 300 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a camera photosensitive element through a lens, an optical signal is converted into an electrical signal, and the camera photosensitive element transmits the electrical signal to an ISP for processing, to convert the electrical signal into an image visible to naked eyes. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the first terminal 300 may include one or N cameras 193, where N is a positive integer greater than 1.

The digital signal processor is configured to process a digital signal, and may process another digital signal in addition to the digital image signal. For example, when the first terminal 300 selects a frequency, the digital signal processor is configured to perform Fourier transformation on frequency energy.

The video codec is configured to compress or decompress a digital video. The first terminal 300 may support one or more video codecs. In this way, the first terminal 300 may play or record videos in a plurality of encoding formats, for example, moving picture experts group (moving picture experts group, MPEG)-1, MPEG-2, MPEG-3, and MPEG-4.

The external memory interface 120 may be configured to connect to an external memory card, for example, a micro SD card, to expand a storage capability of the first terminal 300. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 executes various function applications and data processing of the first terminal 300 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (for example, audio data and a phone book) and the like created when the first terminal 300 is used. In addition, the internal memory 121 may include a high-speed random access memory, and may further include a nonvolatile memory, for example, at least one magnetic disk storage device, a flash memory, or a universal flash storage (universal flash storage, UFS).

The first terminal 300 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The first terminal 300 may allow for listening to music or answering hands-free calls with the speaker 170A.

The receiver 170B, also referred to as an "earpiece", is configured to convert an electrical audio signal into a sound signal. When a call is answered or voice information is received by using the first terminal 300, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the first terminal 300. In some other embodiments, two microphones 170C may be disposed in the first terminal 300, to collect a sound signal and further implement a noise reduction function. In some other embodiments, three, four, or more microphones 170C may alternatively be disposed in the first terminal 300, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone-conduction sensor, and the like.

Certainly, the first terminal 300 may further include a charging management module, a power management module, a battery, a button, an indicator, one or more SIM card interfaces, and the like. This is not limited in this embodiment of this application.

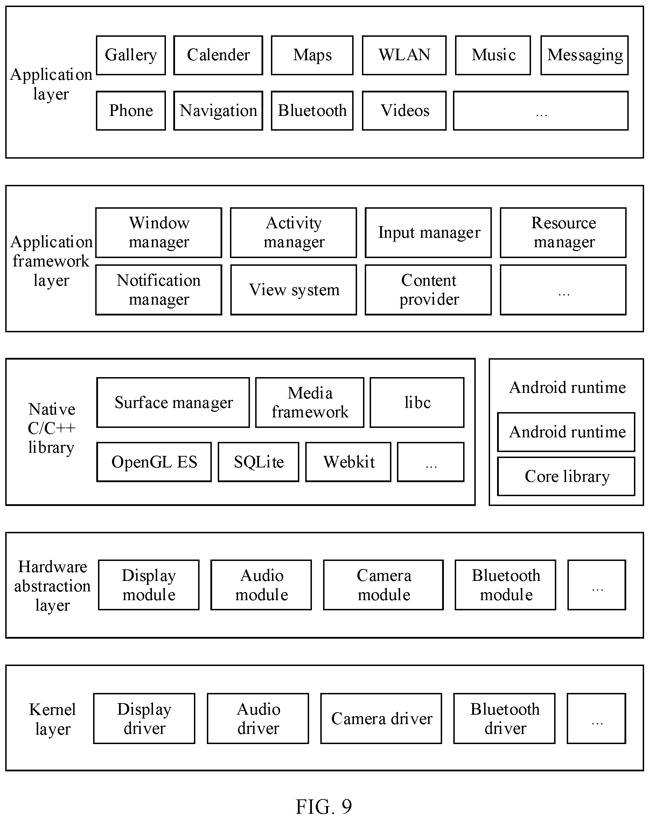

FIG. 9 is a schematic diagram of a software structure of the first terminal 300 according to an embodiment of this application. For a software structure of another terminal according to this application, for example, the second terminal, refer to FIG. 9. Details are not described again.

In a layered architecture, software is divided into several layers, and each layer has a clear role and task. The layers communicate with each other through a software interface. In some embodiments, an Android system is divided into five layers: an application layer, an application framework layer, Android runtime (Android runtime, ART) and a native C/C++ library, a hardware abstraction layer (hardware abstraction layer, HAL), and a kernel layer from top to bottom.

The application layer may include a series of application packages.

As shown in FIG. 9, the application packages may include applications such as Camera, Gallery, Calendar, Phone, Maps, Navigation, WLAN, Bluetooth, Music, Videos, and Messaging.

The application framework layer provides an application programming interface (application programming interface, API) and a programming framework for applications at the application layer. The application framework layer includes some predefined functions.

As shown in FIG. 9, the application framework layer may include a window manager, a content provider, a view system, a resource manager, a notification manager, an activity manager, an input manager, and the like.

The window manager provides a window manager service (window manager service, WMS), which can be used for window management, window animation management, surface management, and used as a transit point for an input system.

The content provider is configured to store and obtain data, and enable the data to be accessed by an application. The data may include a video, an image, audio, calls that are made and received, a browsing history and a bookmark, a phone book, and the like.

The view system includes visual controls such as a control for displaying a text and a control for displaying an image. The view system may be configured to construct an application. A display interface may include one or more views. For example, a display interface including a Messaging notification icon may include a text display view and an image display view.

The resource manager provides various resources such as a localized character string, an icon, an image, a layout file, and a video file for an application.

The notification manager enables an application to display notification information in a status bar, and may be configured to convey a notification message. The displayed notification information may automatically disappear after a short pause without user interaction. For example, the notification manager is configured to give notifications of download completion, messages, and the like. The notification manager may alternatively be a notification that appears in a top status bar of the system in a form of a graph or a scroll bar text, for example, a notification for an application running in the background, or may be a notification that appears on the screen in a form of a dialog window. For example, text information is displayed in the status bar, a prompt tone is played, the electronic device vibrates, or an indicator blinks.

The activity manager can provide an activity manager service (activity manager service, AMS), which can be used for startup, switch, and scheduling of system components (for example, an activity, a service, a content provider, a broadcast receiver), and management and scheduling of an application process.

The input manager can provide an input manager service (input manager service, IMS), which can be used for system input management, for example, touchscreen input, key input, and sensor input. The IMS obtains an event from an input device node and allocates the event to an appropriate window through interaction with the WMS.

The Android runtime includes a core library and Android runtime. The Android runtime is responsible for converting source code into machine code. The Android runtime mainly includes an ahead of time (ahead of time, AOT) compilation technology and a just in time (just in time, JIT) compilation technology.

The core library is mainly used to provide functions of basic Java libraries, such as a basic data structure library, a mathematics library, an I/O library, a tool library, a database, and a network library. The core library provides the API for the user to develop the Android application.

A native C/C++ library may include a plurality of functional modules, such as a surface manager (surface manager), a media framework (media framework), libc, OpenGL ES, SQLite, and Webkit.

The surface manager is configured to manage a display subsystem, and provide fusion of 2D and 3D layers for a plurality of applications. The media framework supports playback and recording of audio and videos in a plurality of commonly used formats, static image files, and the like. The media library may support a plurality of audio and video encoding formats, for example, MPEG4, H.264, MP3, AAC, AMR, JPG, and PNG. OpenGL ES provides drawing and manipulation of 2D and 3D graphics in the application. SQLite provides a lightweight relational database for the application of an electronic device 100.

The hardware abstraction layer runs in user space (user space), encapsulates drivers of the kernel layer, and provides an invoking interface for the upper layer

The kernel layer is a layer between hardware and software. The kernel layer includes at least a display driver, a camera driver, an audio driver, and a sensor driver

The following describes an example of a working process of software and hardware of the electronic device 100 with reference to a photographing scenario.

When a touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap touch operation and a control corresponding to the single-tap operation is a control of a camera application icon. A camera application invokes an interface at the application framework layer, so that the camera application is started. Then, a camera driver is started by invoking the kernel layer, and a static image or a video is captured through the camera 193.

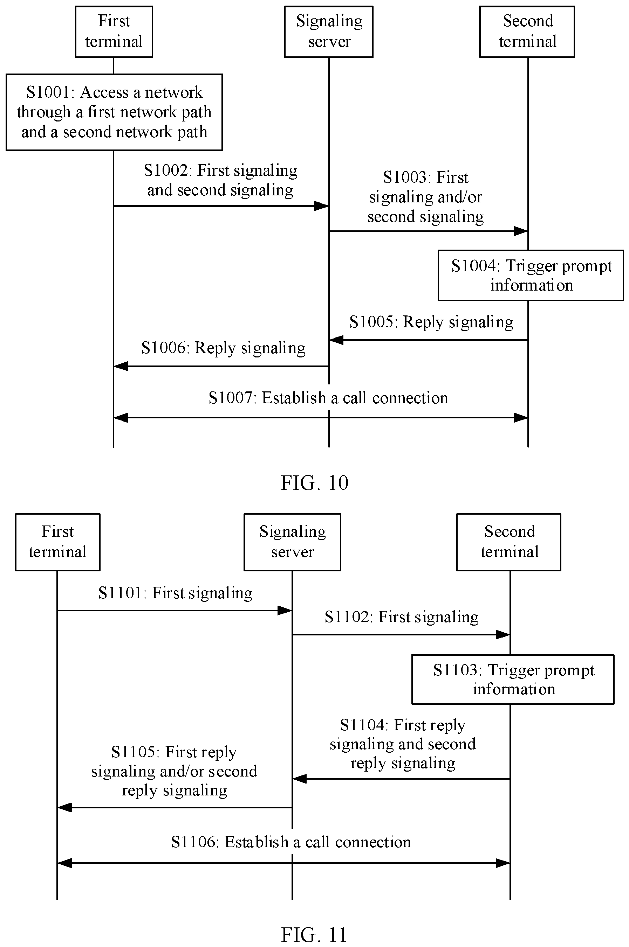

FIG. 10 is a schematic flowchart according to an embodiment of this application.

S1001: A first terminal accesses a network through a first network path and a second network path.

As described above, the first terminal may further access the network through a plurality of network paths. The plurality of network paths may be networks of a same type. For example, the first terminal accesses, through a plurality of SIM cards, an operator network corresponding to the plurality of SIM cards. Alternatively, the plurality of network paths may be networks of different types. For example, the first terminal accesses the network through Wi-Fi and an operator network, or accesses the network through a wired Ethernet network and a wireless Wi-Fi network.

S1002: In response to an instruction of a user A, first signaling and second signaling that correspond to each other are sent through the first network path and the second network path respectively.

When the user A of the first terminal needs to establish a call connection to a user B of the second terminal, signaling for call connection establishment needs to be first sent. To avoid a case in which the sent signaling cannot be received by the second terminal due to factors such as network quality, the first terminal may send a plurality of pieces of signaling through the first network path and the second network path separately, that is, send the first signaling and the second signaling that correspond to each other simultaneously. Both the first signaling and the second signaling are used to request to establish the call connection to the second terminal.

In a possible implementation, the first terminal needs to first send the plurality of pieces of signaling to a signaling server. Then, the signaling server forwards the plurality of pieces of signaling to the second terminal. In another possible implementation, the first terminal may directly send the plurality of pieces of signaling to the second terminal. When receiving one of the plurality of pieces of signaling and receiving an answering instruction from the user B, the second terminal may establish a call connection to the first terminal. For ease of description, this embodiment describes an implementation in which the signaling is forwarded by the signaling server. This is not limited in this embodiment.

In a possible implementation, the first terminal accesses the network through not only the first network path and the second network path, but also the third network path. For example, two SIM cards may be installed on the first terminal, and two network paths are established between the first terminal and an operator based on the two SIM cards. The first terminal is further connected to a specific Wi-Fi hotspot. This forms three paths. Before sending redundant first signaling and second signaling, the first terminal may first detect statuses of the three network paths, and select two paths with better network statuses from the three network paths to transmit the first signaling and the second signaling respectively. Alternatively, the first terminal may preset, or preset based on an instruction of the user, a network path for signaling transmission. When a status of the network path is normal, the preset network path is preferably selected for signaling transmission. Only when the status of the preset network path is less than a threshold, another network path is selected for signaling transmission.

S1003: When receiving the first signaling and/or the second signaling, the signaling server sends the first signaling and/or the second signaling to the second terminal.

S1004: The second terminal receives the first signaling and/or the second signaling, and triggers preset prompt information.

After receiving the first signaling or the second signaling, the second terminal triggers the preset prompt information, for example, vibrates when ringing, and displays an incoming call screen, so that the user B is prompted with the request of a call to the second terminal.

In addition, after completely receiving the first signaling or the second signaling (using the first signaling as an example), the second terminal may further record information about the first signaling. If subsequently receiving the second signaling corresponding to the first signaling, the second terminal may determine, based on the recorded information about the first signaling, that the second signaling is redundant signaling corresponding to the first signaling. Therefore, when receiving the second signaling, regardless of a current state of the second signaling, for example, the state may be that the second terminal has established a call with the first terminal, the second terminal has declined a call, or the second terminal has answered and then ended a call, the second terminal may not process the second signaling. In this way, the second terminal does not receive the redundant signaling and thus does not generate a repeated reminder, and user experience is not affected.

S1005: In response to an instruction of the user B, the second terminal sends reply signaling.

When the user B agrees to have a conversation with the user A, the user B may touch or slide a control on a call screen displayed on the second terminal, to indicate the second terminal to send the reply signaling. The reply signaling indicates that the user B accepts establishment of a call connection between the second terminal and the first terminal.

Certainly, when the user B does not agree to have a conversation with the user A, the user B may touch or slide a control on the call screen displayed on the second terminal, to indicate the second terminal not to send the reply signaling or to send signaling indicating that the user B rejects establishment of a call connection between the second terminal and the first terminal. An example in which the user B agrees to have a conversation with the user A is used in this application for description. This is not limited.

S1006: The signaling server forwards the reply signaling from the second terminal to the first terminal.

S1007: The first terminal establishes a call connection to the second terminal.

After receiving the reply signaling, the first terminal may establish the call connection to the second terminal. Audio/video media data including call content may be forwarded by a corresponding server, or may be directly transmitted between the first terminal and the second terminal. This is not limited in this application.

FIG. 11 is a schematic diagram of another procedure according to an embodiment of this application.

As shown in FIG. 11, this embodiment includes the following steps.

S1101: In response to an instruction of a user A, first signaling is sent.

S1102: After receiving a first instruction, a signaling server sends the signaling to a second terminal.

The second terminal may access a network through a plurality of network paths. The plurality of network paths may be networks of a same type. For example, the second terminal accesses, through a plurality of SIM cards, an operator network corresponding to the plurality of SIM cards. Alternatively, the plurality of network paths may be networks of different types. For example, the second terminal accesses the network through Wi-Fi and an operator network, or accesses the network through a wired Ethernet network and a wireless Wi-Fi network.

When sending the first signaling to the second terminal, the signaling server may forward the first signaling to the second terminal through any network path through which the second terminal accesses the network. Alternatively, the signaling server may copy the first signaling for a plurality of times, and forward the plurality of pieces of signaling to the second terminal through a plurality of network paths through which the second terminal accesses the network. This is not limited in this application.

S1103: The second terminal receives the first signaling, and triggers preset prompt information.

S 1104: In response to an instruction of a user B, redundant reply signaling is sent through a fourth path and a fifth path in the plurality of network paths.

Similar to step S1005, when the user B agrees to have a conversation with the user A, the user B may touch or slide a control on a call screen displayed on the second terminal, to indicate the second terminal to send the reply signaling. The reply signaling indicates that the user B accepts establishment of a call connection between the second terminal and the first terminal.

The second terminal is connected to the network through the plurality of network paths. Therefore, to increase a probability that the first terminal receives the reply signaling, the redundant reply signaling may be sent through the fourth path and the fifth path in the plurality of network paths. For example, when the second terminal accesses the network through both Wi-Fi and the operator network, the second terminal may send the first reply signaling and the second reply signaling that correspond to each other through both Wi-Fi and the operator network.

S1105: The signaling server forwards the first reply signaling and/or the second reply signaling from the second terminal to the first terminal.

S1106: The first terminal establishes a call connection to the second terminal.

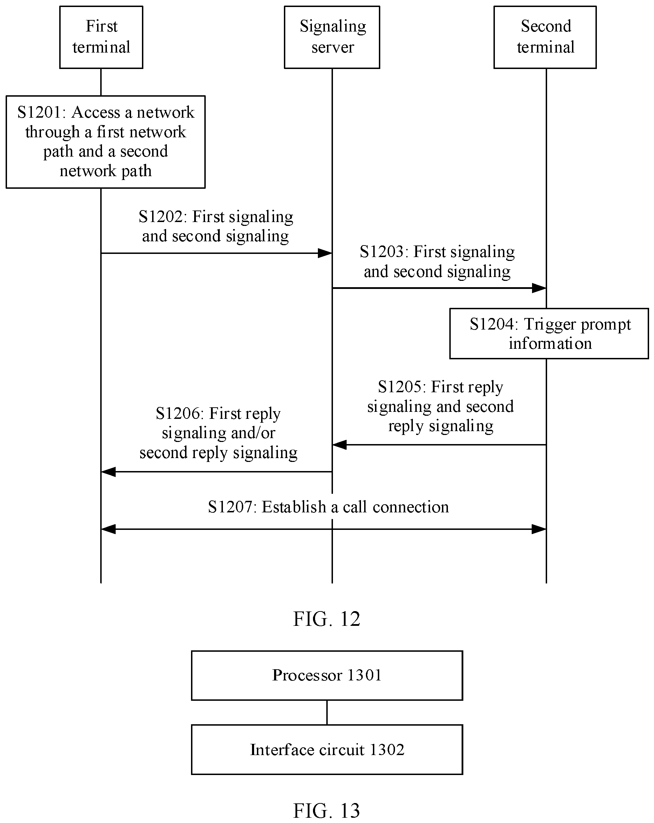

FIG. 12 is a schematic diagram of another procedure according to an embodiment of this application.

S1201: A first terminal accesses a network through a first network path and a second network path.

S1202: In response to an instruction of a user A, first signaling and second signaling that correspond to each other are sent through the first network path and the second network path respectively.

S 1203: When receiving the first signaling and the second signaling, a signaling server sends the received first signaling and the second signaling to the second terminal.

In this embodiment, the second terminal may alternatively access a network through a plurality of network paths, for example, a fourth path and a fifth path. After receiving the first signaling and the second signaling from the first terminal, the signaling server may separately send the first signaling and the second signaling to the second terminal through the plurality of network paths through which the second terminal accesses the network.

When the first signaling and the second signaling are separately forwarded to the second terminal, a plurality of policies may be used. For example, each time the signaling server receives the signaling sent by the first terminal to the second terminal, the signaling server may randomly send the signaling to the second terminal through a specific network path between the second terminal and the signaling server. Alternatively, each time the signaling server receives the signaling sent by the first terminal to the second terminal, the signaling server first determines a path that is currently in a better status and that is between the signaling server and the second terminal, and sends the signaling to the second terminal through the path. Alternatively, when the signaling server receives, for a first time, the signaling sent by the first terminal to the second terminal, the signaling server selects, randomly or based on path statuses, a first path for signaling transmission. When the signaling server receives, for a second time, the signaling sent by the first terminal to the second terminal, and the signaling is redundant signaling corresponding to the signaling received for the first time, the signaling server selects a path different from the first path for forwarding the signaling to the second terminal. In this case, the signaling server separately transmits signaling through different paths between the signaling server and the second terminal. This reduces a probability of a case in which the second terminal fails to completely receive the signaling due to a network status or the like.

S1204: The second terminal receives the first signaling and/or the second signaling.

S1205: In response to an instruction of a user B, a redundant reply instruction is sent through a fourth path and a fifth path in the plurality of network paths.

S1206: The signaling server forwards the first reply signaling and/or the second reply signaling from the second terminal to the first terminal.

When receiving both the first reply signaling and the second reply signaling, the signaling server may forward, to the first terminal, the first reply signaling and the second reply signaling through the plurality of network paths through which the first terminal accesses the network. For a policy used to forward the first reply signaling and the second reply signaling, refer to step S 1003. Details are not described herein again.

S1207: The first terminal establishes a call connection to the second terminal.

An embodiment of this application further provides a chip system. As shown in FIG. 13, the chip system includes at least one processor 1301 and at least one interface circuit 1302. The processor 1301 and the interface circuit 1302 may be interconnected through a line. For example, the interface circuit 1302 may be configured to receive a signal from another apparatus (for example, a memory in the first terminal 300). For another example, the interface circuit 1302 may be configured to send a signal to another apparatus (for example, the processor 1301). For example, the interface circuit 1302 may read instructions stored in the memory, and send the instructions to the processor 1301. When the instructions are executed by the processor 1301, an electronic device is enabled to perform steps performed by the first terminal 300 (for example, a mobile phone) in the foregoing embodiments. Certainly, the chip system may further include another discrete device. This is not specifically limited in this embodiment of this application.

An embodiment of this application further provides an apparatus. The apparatus is included in an electronic device, and the apparatus has a function of implementing behavior of the electronic device in any method in the foregoing embodiments. This function may be implemented by using hardware, or may be implemented by executing corresponding software by hardware. The hardware or the software includes at least one module or unit corresponding to the foregoing function, for example, a detection module or unit, a display module or unit, a determining module or unit, and a calculation module or unit.

An embodiment of this application further provides a computer storage medium, including computer instructions. When the computer instructions are run on an electronic device, the electronic device is enabled to perform any method in the foregoing embodiments.

An embodiment of this application further provides a computer program product. When the computer program product is run on a computer, the computer is enabled to perform any method in the foregoing embodiments.

An embodiment of this application further provides a graphical user interface on an electronic device. The electronic device includes a display, a camera, a memory, and one or more processors. The one or more processors are configured to execute one or more computer programs stored in the memory; and the graphical user interface includes a graphical user interface displayed when the electronic device performs any method in the foregoing embodiments.

It may be understood that, to implement the foregoing functions, the electronic device and the like include a corresponding hardware structure and/or a corresponding software module for performing each function. A person skilled in the art should easily be aware that units and algorithm steps in the examples described with reference to embodiments disclosed in this specification can be implemented by hardware or a combination of hardware and computer software in embodiments of this application. Whether a function is executed in a manner of hardware or hardware driven by computer software depends on specific applications and design constraint conditions of the technical solutions. A person skilled in the art may use different methods to implement the described functions for each particular application, but it should not be considered that the implementation goes beyond the scope of embodiments of the present invention.

In embodiments of this application, functional module division may be performed on the electronic device and the like based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of the present invention, division into modules is an example and is merely logical function division, and may be other division in actual implementation.

The foregoing descriptions about implementations allow a person skilled in the art to clearly understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In addition, functional units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions in embodiments of this application essentially, or the part contributing to conventional technologies, or all or some of the technical solutions may be implemented in a form of a software product. The computer software product is stored in a storage medium, and includes several instructions for instructing a computer device (which may be a personal computer, a server, a network device, or the like) or a processor to perform all or some of the steps of the methods described in embodiments of this application. The foregoing storage medium includes: any medium that can store program code, such as a flash memory, a removable hard disk drive, a read-only memory, a random access memory, a magnetic disk, or an optical disc.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication system, wherein the communication system comprises a first terminal and a second terminal, wherein
the first terminal is configured to: access a network through a first path and a second path; and
send, in response to an instruction of a first user, first signaling and second signaling that correspond to each other through the first path and the second path respectively, wherein the first signaling and the second signaling are used to request to establish a call connection to the second terminal; and
the second terminal is configured to: receive the first signaling and/or the second signaling;
send reply signaling in response to an instruction of a second user, wherein the reply signaling indicates to agree to establish the call connection to the first terminal; and
establish the call connection to the first terminal.

2. The calling system according to claim 1, wherein
the first terminal is further configured to access the network through a third path; and
the first terminal is configured to:
determine statuses of the first path, the second path, and the third path; and
send, in response to the instruction of the first user, the first signaling and the second signaling through the first path and the second path respectively based on the statuses of the first path, the second path, and the third path.

3. The calling system according to claim 1 or 2, wherein
the second terminal is further configured to access a network through a fourth path and a fifth path; and
the second terminal is configured to:
receive the first signaling transmitted through the fourth path and/or the second signaling transmitted through the fifth path.

4. The calling system according to any one of claims 1 to 3, wherein
the first path and the second path are paths corresponding to at least two of cellular network, wireless fidelity Wi-Fi, Bluetooth, and Ethernet communication technologies; or
the first path and the second path are cellular networks corresponding to different subscriber identity module SIM cards.

5. A call connection establishment method, wherein the method is applied to a first terminal, and the method comprises:
accessing a network through a first path and a second path;
sending, in response to an instruction of a first user, first signaling and second signaling that correspond to each other through the first path and the second path respectively, wherein the first signaling and the second signaling are used to request to establish a call connection to a second terminal;
receiving a reply instruction from the second terminal; and
establishing the call connection to the second terminal.

6. The method according to claim 5, wherein the method further comprises:
accessing the network through a third path; and
the sending, in response to an instruction of a first user, first signaling and second signaling that correspond to each other through the first path and the second path respectively comprises:
determining statuses of the first path, the second path, and the third path; and
sending, in response to the instruction of the first user, the first signaling and the second signaling through the first path and the second path respectively based on the statuses of the first path, the second path, and the third path.

7. The method according to claim 5 or 6, wherein
before the sending, in response to an instruction of a first user, first signaling and second signaling that correspond to each other through the first path and the second path respectively, the method further comprises:
determining that the status of the first path is less than a threshold.

8. The method according to any one of claims 5 to 7, wherein
the first path and the second path are paths corresponding to at least two of cellular network, wireless fidelity Wi-Fi, Bluetooth, and Ethernet communication technologies; or
the first path and the second path are cellular networks corresponding to different subscriber identity module SIM cards.

9. The method according to any one of claims 5 to 8, wherein
before the sending, in response to an instruction of a first user, first signaling and second signaling that correspond to each other through the first path and the second path respectively, the method further comprises:
determining that the instruction of the first user indicates the first terminal to establish the call connection to the second terminal by using a target application; or
determining that the instruction of the first user indicates the first terminal to establish the call connection to the second terminal corresponding to a target contact.

10. The method according to any one of claims 5 to 9, wherein before the sending first signaling and second signaling that correspond to each other through the first path and the second path respectively,
the method further comprises:
determining that the first terminal has enabled a function of sending redundant signaling.

11. A call connection establishment method, wherein the method is applied to a second terminal, and the method comprises:
receiving first signaling and second signaling from a first terminal, wherein the first signaling corresponds to the second signaling, and the first signaling and the second signaling are used to request to establish a call connection to the second terminal;
sending reply signaling in response to an instruction of a second user, wherein the reply signaling indicates to agree to establish the call connection to the first terminal; and
establishing the call connection to the first terminal.

12. The method according to claim 11, wherein
the second terminal is further configured to access a network through a fourth path and a fifth path; and
the receiving first signaling and second signaling from a first terminal comprises:
receiving the first signaling transmitted through the fourth path and the second signaling transmitted through the fifth path.

13. The method according to claim 11 or 12, wherein
the fourth path and the fifth path are paths corresponding to at least two of cellular network, wireless fidelity Wi-Fi, Bluetooth, and Ethernet communication technologies; or
the fourth path and the fifth path are cellular networks corresponding to different subscriber identity module SIM cards.

14. The method according to any one of claims 11 to 13, wherein
the receiving first signaling and second signaling from a first terminal comprises:
receiving the first signaling, wherein the first signaling comprises an identifier;
receiving the second signaling, and determining that the second signaling comprises the identifier; and
discarding the second signaling.

15. An electronic device, comprising a memory and a processor, wherein the memory is configured to store instructions, and the processor is configured to read the instructions, to enable the electronic device to perform the method according to any one of claims 5 to 14.

16. A computer-readable storage medium, comprising computer instructions, wherein when the computer instructions are run on an electronic device, the electronic device is enabled to perform the method according to any one of claims 5 to 14.

17. A computer program product, comprising computer instructions, wherein when the computer instructions are run on a computer, the computer is enabled to perform the method according to any one of claims 5 to 14.
